# EUROPÄISCHE PATENTANMELDUNG

(11) **EP 1 702 711 A2**
(43) Veröffentlichungstag der Anmeldung: **20.09.2006**
(21) Anmeldenummer: 06002771.1
(22) Anmeldetag: 10.02.2006
(51) Int. Cl.: B23P 19/00, B62D 65/00, B62D 65/12

(54) **Verfahren zur Durchführung von Schraub- und/oder Einstellarbeiten an Achsen für Kraftfahrzeuge bei der Produktion**

(30) Priorität: 14.03.2005 DE 102005011950; 07.11.2005 DE 102005053370
(71) Anmelder: Schenck Final Assembly Products GmbH, 66346 Püttlingen (DE)
(72) Erfinder: Rolinger, Dieter, 66773 Schwalbach (DE); Manzel, Jörg, 57320 Bouzonville (FR)
(74) Vertreter: Wieske, Thilo

(57) **Zusammenfassung**

Die Erfindung betrifft ein Verfahren zur Durchführung von Schraub- und/oder Einstellarbeiten an Achsen für Kraftfahrzeuge bei der Produktion, wobei die Achse zur Durchführung der Schraub- und/oder Einstellarbeiten in Richtung der Werkzeuge (6,7,8,9) zur Durchführung der Schraub- und/oder Einstellarbeiten bewegt wird, wobei die Achse bei der Durchführung der Schraub- und/oder Einstellarbeiten eine definierte Position hinsichtlich Lage und Orientierung zu Werkzeugen (6,7,8,9) für die Durchführung der Schraub- und/oder Einstellarbeiten aufweist, wobei Mittel (4,5) vorhanden sind zum Entnehmen der jeweiligen Achse aus dem Transportsystem der Produktionsanlage, wobei diese Mittel (4,5) weiterhin eine Zuführung und Ausrichtung der entnommenen Achse relativ zu den Werkzeugen (6,7,8,9) zur Durchführung der Schraub- und/oder Einstellarbeiten vornehmen, wobei dann die Schraub-und/oder Einstellarbeiten ausgeführt werden, wobei nach Abschluss der Schraub- und/oder Einstellarbeiten die jeweilige Achse wieder in das Transportsystem der Produktionsanlage eingeschleust wird.

## Beschreibung

Die Erfindung betrifft ein Verfahren zur Durchführung von Schraub- und/oder Einstellarbeiten an Achsen für Kraftfahrzeuge bei der Produktion nach dem Oberbegriff des Patentanspruchs 1.

Der Anmelderin ist bereits ein derartiges Verfahren bekannt, bei dem in der laufenden Produktion Schraub- und Einstellstationen in der Produktionslinie installiert sind. Diese sind bei einem Transport in der Produktionslinie mittels eines Transportbandes derart ausgestaltet, dass über dem Transportband ein Portal ausgebildet ist, wobei an den senkrechten und waagrechten Tragelernenten dieses Portals die Werkzeuge zur Durchführung der Schraub- und/oder Einstellarbeiten in verschiedene Richtungen beweglich und um verschiedene Achsen drehbar angeordnet sind. Zur Durchführung der Schraub- und/oder Einstellarbeiten wird die Achse angehoben in Richtung der entsprechenden Werkzeuge und dabei gestützt gelagert. Nach dem Anheben werden die einzelnen Werkzeuge zur Feinpositionierung und insbesondere zur Ausrichtung der Drehachsen von Schraubwerkzeugen relativ zur Achse, die für die Kraftfahrzeuge vorgesehen ist, in Richtung der Achse bewegt. Diese Bewegung wird mittels pneumatischen oder hydraulischen Antrieben realisiert. Die Ausrichtung im Hinblick auf Positionierung und Orientierung der Werkzeuge relativ zur Achse wird also in der Produktionslinie von den Werkzeugen vorgenommen.

Der vorliegenden Erfindung liegt die Aufgabe zu Grunde, ein Verfahren vorzuschlagcn, mit dem derartige Arbeiten an der Achse in der laufenden Produktion einfacher und flexibler durchgeführt werden können.

-Diese Aufgabe wird nach der vorliegenden Erfindung gelöst, indem Mittel vorhanden sind zum Entnehmen der jeweiligen Achse aus dem Transportsystem der Produktionsanlage, wobei diese Mittel weiterhin eine Zuführung und Ausrichtung der entnommenen Achse relativ zu den Werkzeugen zur Durchführung der Schraub- und/oder Einstellarbeiten vornehmen, wobei dann die Schraub- und/oder Einstellarbeiten ausgeführt werden, wobei nach Abschluss der Schraub- und/oder Einstellarbeiten die jeweilige Achse wieder in das Transportsystem der Produktionsanlage eingeschleust wird.

Dadurch wird vorteilhaft eine Flexibilität hinsichtlich des Transportsystems in der Produktionslinie erreicht. Mit dem Verfahren nach der vorliegenden Erfindung lässt sich eine einheitliche Station zur Durchführung der Schraub- und Einstellarbeiten an den Achsen konzipieren und diese an den entsprechenden Stellen neben der Produktionslinie installieren. Es muss lediglich noch eine Anpassung der Mittel zur Entnahme der Achse von dem Transportsystem vorgenommen werden an das jeweilige Transportsystem in der Produktionslinie. Mit einer einheitlichen Station können also die Arbeiten an den Achsen vorgenommen werden, unabhängig davon, ob in der Transportlinie mittels eines Flurfördersystems, mittels einer deckengehängten Förderung oder mittels einer Bandförderung die Fahrzeugteile bzw. teilmontierten Fahrzeuge bewegt werden.

Weiterhin erweist es sich als vorteilhaft, dass der Aufwand hinsichtlich der Bewegungsmöglichkeiten, die zur Durchführung der Arbeiten an der Achse vorgehalten werden muss, verringert wird. Es wird nach der vorliegenden Erfindung nicht mehr zwingend notwendig, jedes einzelne Schraubwerkzeug entsprechend beweglich auszugestalten, um dieses relativ zu der Achse, an der die Arbeiten auszuführend sind, beweglich auszugestalten. Vielmehr können diese Werkzeuge positionsfest und fest hinsichtlich ihrer Orientierung montiert werden. Die Ausrichtung der Achse wird dann durch die entsprechenden Mittel realisiert. Ggf. kann es noch sinnvoll sein, einzelne Werkzeuge beweglich auszugestalten, wenn der Bewegungsablauf zur Positionierung der Achse zu einzelnen Werkzeugen zu kompliziert werden sollte und es einfacher ist, in einem solchen Fall das Werkzeug in bestimmtem Maße beweglich auszugestalten.

Es ist dann lediglich noch notwendig, für verschiedene Typen von Achsen beispielsweise getrennt für Vorder- und Hinterachsen sowie weiterhin getrennt nach verschiedenen Fahrzeugen und Fahrzeugtypen - soweit diese sich hinsichtlich der verbauten Achsen unterscheiden - verschiedene Konfigurationen der Stationen vorzusehen.

Nachdem die entsprechenden Arbeiten durchgeführt wurden, wird die jeweilige Achse wieder in die Produktionslinie eingeschleust.

Es ist dabei möglich, die jeweilige Achse während der Durchführung der Schraub- und/oder Einstellarbeiten durch die Mittel zu halten oder aber in speziellen Halteelementen von Schraub- / Einstellstationen abzulegen zur Durchführung der Arbeiten, wobei die Achse dann nach Durchführung der Arbeiten wieder mittels der Mittel entnommen und in die Produktionslinie eingeschleust wird.

Soweit der Aktionsradius der Mittel groß genug ist, kann bei einem Ablegen der Achse in einer Schraub- / Einstellstation während der Durchführung der Arbcitsschritte an dieser Achse von den Mitteln eine andere Achse aus dcr Produktionslinie entnommen und in Halteelemente einer anderen Schraub- / Einstellstation abgelegt werden.

Bei der Ausgestaltung nach Anspruch 2 sind die Mittel ein Roboter.

Dies erweist sich insofern als vorteilhaft, als derartige Roboter als standardisierte Geräte erhältlich sind. Eine solche Lösung ist also ohne besonderen konstruktiven Aufwand im Einzel fall realisierbar.

Bei der Ausgestaltung nach Anspruch 3 sind in einer Produktionsanlage in Linie des Produktionsflusses verschiedene Mittel zum Entnehmen der Achsen angeordnet, wobei diese Mittel die Achsen im Hinblick auf unterschiedliche Anordnung von Werkzeugen zur Durchfühmng der Schraub- und/oder Einstellarbeiten zuführen und ausrichten.

Dadurch wird vorteilhaft erreichbar, dass in einer Produktionslinie verschiedene Typen von Achsen bearbeitet werden können, indem diese jeweils an der Stelle entnommen und bearbeitet werden, an der die Station für die jeweilige Achse platziert ist. An den anderen Stationen wird die entsprechende Achse jeweils vorbei gefördert, ohne entnommen zu werden.

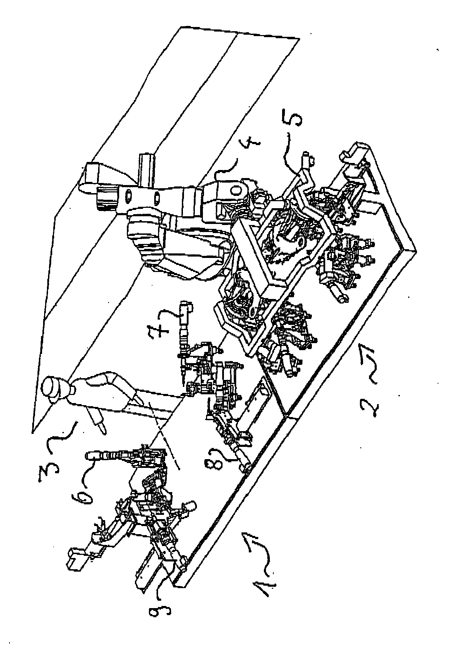

Die einzige Figur zeigt zwei Stationen 1, 2 zur Durchführung der Schraub- und/oder Einstellarbeiten an einer Achse. Es ist zu sehen, dass an der Station 1 ein Werker 3 steht zur Durchführung von Justierungsarbeiten den Station. In dieser Station 1 befindet sich keine Achse.

An der Station 2 ist ein Roboter 4 vorhanden mit einer Greifeinrichtung 5. In dieser Greifeinrichtung 5 befindet sich eine Achse, die in die Station 2 mit den Werkzeugen zur Durchführung der Schraub- und/oder Einstellarbeiten ausgerüstet ist.

Im Zusammenhang mit der Station 1 sind diese Werkzeuge mit den Bezugsziffern 6, 7, 8, 9 versehen. Aus Gründen der Übersichtlich sind die entsprechenden Werkzeuge in der Station 2 nicht mit Bezugsziffern versehen.

Mit diesen Werkzeugen 6, 7, 8, 9 können Schraubverbindungen an Fahrzeugachsen hergestellt werden. Ebenso ist es möglich, Einstellung der Fahrwerkgeometrie an Fahrzeugachsen vorzunehmen.

Der Ablauf stellt sich wie folgt dar. Der Roboter 4 übernimmt mit der Greifeinrichtung 5 die Achse vom Transportsystem. Diese Transportsystem ist hier nicht dargestellt. Die Achse wird mittels der Greifeinrichtung 5 positioniert und derart orientiert, dass die entsprechenden Arbeiten durch die Werkzeuge 6, 7, 8, 9 durchgeführt werden können. Die Achse wird dabei durch die Greifeinrichtung 5 nicht nur positioniert und orientiert sondern weiterhin auch für die Durchführung der Arbeiten sicher und stabil gehalten oder in der Station 2 abgelegt.

Es ist möglich, die Schraub- und/oder Einstellarbeiten an der Achse in mehreren Arbeitsschritten auszuführen. Soweit erforderlich, kann dabei die Achse zwischen diesen Arbeitsschritten umgesetzt und neu positioniert werden.

Nach Durchführung der Arbeiten wird die Achse wieder in die Prozesskette eingeschleust.

## Patentansprüche

1. Verfahren zur Durchführung von Schraub- und/oder Einstellarbeiten an Achsen für Kraftfahrzeuge bei der Produktion, wobei die Achse zur Durchführung der Schraub- und/oder Einstellarbeiten in Richtung der Werkzeuge (6, 7, 8, 9) zur Durchführung der Schraub- und/oder Einstellarbeiten bewegt wird, wobei die Achsc bei der Durchführung der Schraub- und/oder Einstellarbcitcn eine definierte Position hinsichtlich Lage und Orientierung zu Werkzeugen (6, 7, 8, 9) für die Durchführung der Schraub- und/oder Einstellarbeiten aufweist,
**dadurch gekennzeichnet, dass** Mittel (4, 5) vorhanden sind zum Entnehmen der jeweiligen Achse aus dem Transportsystem der Produktionsanlage, wobei diese Mittel (4, 5) weiterhin eine Zuführung und Ausrichtung der entnommenen Achse relativ zu den Werkzeugen (6, 7, 8, 9) zur Durchführung der Schraub- und/oder Einstellarbeiten vornehmen, wobei dann die Schraub- und/oder Einstellarbeiten ausgeführt werden, wobei nach Abschluss der Schraub- und/oder Einstellarbeiten die jeweilige Achse wieder in das Transportsystem der Produktionsanlage eingeschleust wird,

2. Verfahren nach Anspruch 1,
**dadurch gekennzeichnet**, die Mittel ein Roboter (4, 5) sind.

3. Verfahren nach Anspruch 1 oder 2,
**dadurch gekennzeichnet, dass** in einer Produktionsanlage in Linie des Produktionsflusses verschiedene Mittel (4, 5) zum Entnehmen der Achsen angeordnet sind, wobei diese Mittel (4, 5) die Achsen im Hinblick auf unterschiedliche Anordnungen von Werkzeugen (6, 7, 8, 9) zur Durchführung der Schraub- und/oder Einstellarbeiten zuführen und ausrichten.
